# EUROPÄISCHE PATENTSCHRIFT

(11) **EP 2 425 207 B1**
(45) Veröffentlichungstag und Bekanntmachung des Hinweises auf die Patenterteilung: **30.09.2015**
(21) Anmeldenummer: 10720240.0
(22) Anmeldetag: 29.04.2010
(51) Int. Cl.: G01D 5/22

(54) **VORRICHTUNG UND VERFAHREN ZUR MESSUNG EINER RELATIVBEWEGUNG EINES TARGETS**
APPARATUS AND METHOD FOR MEASURING A RELATIVE MOVEMENT OF A TARGET
DISPOSITIF ET PROCÉDÉ DE MESURE D'UN MOUVEMENT RELATIF D'UNE CIBLE

(30) Priorität: 30.04.2009 AT 6652009
(43) Veröffentlichungstag der Anmeldung: 07.03.2012
(73) Patentinhaber: Austrian Center of Competence in Mechatronics GmbH, 4040 Linz (AT)
(72) Erfinder: SILBER, Siegfried, A-4202 Kirchschlag (AT); REISINGER, Martin, A-4072 Alkoven (AT); DIRNBERGER, Peter, A-4490 St. Florian (AT)
(74) Vertreter: Jell, Friedrich
(86) Internationale Anmeldenummer: PCT/AT2010/000135
(87) Internationale Veröffentlichungsnummer: WO 2010/124310

(56) Entgegenhaltungen:
- DE-A1- 4 237 879
- DE-A1- 10 130 572
- DE-A1-102004 032 258
- US-A- 4 644 570

## Beschreibung

### Technisches Gebiet

Die Erfindung betrifft eine Vorrichtung zur Messung einer Relativbewegung eines Targets, mit einer Steuerung, mit wenigstens einer Spule und wenigstens einer Referenzspule, welche beiden Spulen mit dem Target zur Messung einer Relativbewegung induktiv zusammenwirken, mit einer mit der Spule und/oder mit der Referenzspule verbundenen Kapazität, wobei zumindest Teile der Kapazität und der Spulen wenigstens zwei elektrische Schwingkreise ausbilden, mit wenigstens einer mit der Steuerung verbundenen elektrischen Leistungsversorgung zur Anregung der Schwingkreise und mit einer ein Zeitmessglied, insbesondere TDC Glied, aufweisenden Auswerteschaltung, die mit den Schwingkreisen zur Erzeugung von, von der jeweiligen Anregung der Schwingkreise abhängigen Zeitmessdaten verbunden ist, über die auf die Relativbewegung des Targets rückgeschlossen werden kann.

### Stand der Technik

Für eine konstruktiv einfache Vorrichtung zur Messung einer Relativbewegung, insbesondere Positionsmessung, eines Targets ist es aus der DE10322447A1 bekannt, mit Hilfe eines Zeitmessglieds, insbesondere eines TDC Glieds bzw. eines "Time to Digital Converter" Bausteins, Zeitmessdaten von einem angeregten Schwingkreis aufzunehmen, welcher Schwingkreis sich zwischen einer Kapazität und einer mit dem Target induktiv zusammenwirkenden Spule ausbildet. Anhand dieser Zeitmessdaten, die beispielsweise Informationen zu einer Schwingungsdauer einer abgegriffenen Ausgangsspannung des Schwingkreises und/oder Informationen zur Abklingzeit der Ausgangspannung des Schwingkreises auf ein vorgegebenes Spannungsniveau enthalten können, kann nun unter Berücksichtigung der bekannten physikalischen Zusammenhänge sowie der bekannten elektrischen Kenngrößen der Bauteile auf die Position des Targets rückgeschlossen werden. Um nun bei der Positionsmessung schwer zu berücksichtigende Störeinflüsse, wie dies beispielsweise ein Temperaturdrift darstellen kann, berücksichtigen zu können, schlägt die DE10322447A1 vor, eine Temperatursensorschaltung mit Temperatursensoren, positioniert nahe zur Spule, vorzusehen. Anhand der so gemessenen Temperaturwerte kann nun die, über den Schwingkreis ermittelte Position des Targets in der Genauigkeit verbessert werden. Derartige Schaltungen sind jedoch vergleichsweise aufwendig und bedürfen auf negative Weise einer Erhöhung der Anzahl an analogen Bauteilen, was sowohl die Fehler- als auch die Störanfälligkeit erhöhen kann.

Neben Temperatureinflüssen wirken noch andere negative Störeinflüsse auf die Positionsmessung, was beispielsweise eine Bauteilstreuung darstellen kann. Um solche Einflüsse zu vermeiden sowie auch die Anzahl an Bauteilen zu verringern, schlägt beispielsweise die DE10130572A1 vor, abwechselnd hintereinander angeordnete Messspulen mit einem gemeinsamen Kondensator nacheinander zu verbinden, um hier mehr als zwei Schwingkreise auszubilden. Anhand der Messdaten zu den verschiedenen Schwingkreisen steht der Auswerteschaltung mehr Information über die Position des Beeinflussungselements bzw. des Targets gegenüber den Spulen zur Verfügung. Des Weiteren schlägt die DE10130572A1 vor, die hintereinander angeordneten Messspulen gegeneinander zu entkoppeln, in dem ein Schalenkern bzw. eine Folie mit Ferrit-Pulver vorgesehen wird. Diese Maßnahme ist vergleichsweise konstruktiv aufwendig und kann selbst durch ein Zusammenwirken mit einem gemeinsamen Target eine gegenseitige Beeinflussung nicht ausschließen. Die DE10130572A1 kann daher Störeinflüsse auf die einzelnen Messergebnisse nicht vermeiden, was ein robustes Verfahren zur Messung einer Relativbewegung nicht schaffen kann. Hinzu kommt, dass weitere Störeinflüsse, was beispielsweise eine Alterung der analogen Bauteile darstellen kann, von der DE10130572A1 nicht berücksichtigt wird, welche unberücksichtigen Störeinflüsse im allgemeinen zu einer unerwarteten Verstimmung des Schwingkreises führen kann, was insbesondere dann ein gewichtiger Faktor ist, wenn in vergleichsweise kurzen Zeitintervallen eine Zeitmessung mit einer geforderten hohen Auflösung bzw. Genauigkeit verlangt wird, was im Allgemeinen bei Positionsmessungen anhand von Zeitmessdaten der Fall ist. Es kommt daher selbst bei geringen Störeinflüsse zu großen Fehlern in der Positionsmessung, was derartige Vorrichtungen für eine Vielzahl an Anwendungsfällen ungeeignet macht bzw. für eine hohe Genauigkeit einen erhöhten Wartungsaufwand bedürfen. Hinzu kommt, dass für eine genaue und auch wiederholbare Positionsmessung vergleichsweise enge Toleranzgrenzen in den elektrischen Kenngrößen der Bauteile gefordert sind, so dass ein vergleichsweise hoher Aufwand beim Abgleich des Schwingkreises sowie bei der Auswahl der Bauteile in Kauf genommen werden muss.

### Darstellung der Erfindung

Die Erfindung hat sich daher die Aufgabe gestellt, ausgehend vom eingangs geschilderten Stand der Technik eine Vorrichtung und ein Verfahren zur äußerst genauen Messung einer Relativbewegung an Hand von Zeitmessdaten zu schaffen, die bzw. das nicht nur äußerst autark gegenüber jeglichen Störeinflüssen ist, sondern auch eine äußerst genaue sowie wiederholbare Messung gewährleisten kann. Außerdem soll die Vorrichtung vergleichsweise wartungsfreundlich und konstruktiv einfach sein.

Die Erfindung löst die gestellte Aufgabe hinsichtlich der Vorrichtung dadurch, dass die Referenzspule gegenüber dem Target und der Spule derart angeordnet ist, dass die Referenzspule bei einer Relativbewegung des Targets mit einer zur Spule im Wesentlichen entgegengesetzt induktiven Änderung beaufschlagt wird, um anhand einer Differenzbildung der Zeitmessdaten auf die Relativbewegung des Targets rückzuschließen zu können.

Insbesondere können Störeinflüsse kompensiert werden, wenn die Referenzspule gegenüber dem Target und der Spule derart angeordnet ist, dass die Referenzspule bei einer Relativbewegung des Targets mit einer zur Spule im Wesentlichen entgegengesetzt induktiven Änderung beaufschlagt wird, um anhand einer Differenzbildung der Zeitmessdaten auf die Relativbewegung des Targets rückzuschließen zu können. Es kann nämlich der technische Effekt genützt werden, dass bei einer nahezu im Betrag ident erfassten Relativbewegung auch Störeinflüsse in nahezu identer Weise in den Messdaten der beiden Schwingkreise über eine Differenzbildung eliminiert werden können. Eine derartige Differenzbildung kann beispielsweise von einer Recheneinheit durchgeführt werden, aber auch andere Mittel zur Berechung eine Differenz sind dafür vorstellbar. Exakte und beispielsweise von Temperatur-, und Umgebungseinflüssen unabhängige Messdaten können daher von einer vergleichsweise konstruktiv einfachen Vorrichtung ermöglicht werden. Außerdem ist damit die Vorrichtung hinsichtlich deren analogen Bauteile vergleichsweise wartungsfreundlich, weil auch alterungsbedingte Störeinflüsse der analogen Bauteile vernachlässigt werden können. Hinzu kommt, dass auch Entkopplungen der Spulen nicht vorgesehen werden müssen, weil durch eine Differenzbildung diese gegenseitigen Störungen ebenso vernachlässigt werden können. Die erfindungsgemäße Vorrichtung zeichnet sich daher nicht nur durch seine konstruktive Einfachheit und Wartungsfreundlichkeit sondern auch durch seine genaue und wiederholbare Messung aus, sondern kann auch durch geringe Störanfälligkeit, wie diese bei Magnetlagern oftmals gefordert wird, universell eingesetzt werden. Vorteilhaft kann hier eine im Wesentlichen entgegengesetzt gleiche induktive Änderung berücksichtigt werden. Außerdem kann der Sachverhalt von Vorteil sein, wenn eine mit der Kapazität zur Bildung eines zweiten Schwingkreises verbindbare Referenzspule vorgesehen ist, wobei der in Abhängigkeit der Steuerung angeregte zweite Schwingkreis wenigstens die Referenzspule und die Kapazität umfasst. Damit können nicht nur einfache Konstruktionsverhältnisse geschaffen werden, weil gegenüber einer Temperatursensorschaltung lediglich ein zusätzliches analoges Bauteil vorgesehen werden muss, sondern es kann auch durch die wiederholte Verwendung einer Vielzahl an analogen Bauteilen der Einfluss der Störeffekte auf die Messung einer Relativbewegung vermindert werden. So kann es nämlich möglich werden, über die bekannten physikalischen Zusammenhänge der Schwingkreise sowie den bekannten elektrischen Kenngrößen der Referenzspule wenigstens kapazitiv bedingte Störeinflüsse auf die Messung der Relativbewegung zu erkennen. Dafür können beispielsweise Zeitmessdaten von Schwingungen zwischen der Spule und der Kapazität einerseits und der Referenzspule und der Kapazität andererseits sowie auch Schwingungen zwischen der Spule, Referenzspule und der Kapazität dienlich sein. Erfindungsgemäß können somit erhöhte Toleranzen in den elektrischen Kenngrößen und/oder selbst eine Alterung der Kapazität bei der erfindungsgemäßen Messung vernachlässigt werden, so dass eine nicht nur vergleichsweise einfach abzugleichende sondern auch gegenüber Störeinflüssen äußerst standfeste Vorrichtung geschaffen werden kann. Die Erfindung kann daher stets dafür sorgen, dass eine genaue und auch wiederholbare Messung, sei es nun zur Positionsmessung oder zur Messung eines Drehwinkels, durchführbar ist. Außerdem ist vorstellbar, dass auf Grundlage der erkannten kapazitiven Störeinflüsse auch der Zustand der Spule besser abgeschätzt werden kann, um damit eine zusätzliche Verbesserung zu schaffen. Hinzu kommt, dass die erfindungsgemäße Vorrichtung vergleichsweise wartungsfreundlich sein kann, weil ein Abgleich der Vorrichtung bzw. der Schwingkreise auf einfache Weise über die Referenzspule möglich ist. Wirkt eine Referenzspule mit dem Target zur Messung induktiv zusammen, so kann die Referenzspule ebenso zur Messung der Relativbewegung herangezogen werden. Außerdem kann mit zwei Messungen, nämlich über den ersten Schwingkreis mit der Spule und über den zweiten Schwingkreis mit der Referenzspule, wie bereits erwähnt, die Wirkung der Störeinflüsse der Kapazität zusätzlich vermindert und damit die Genauigkeit der Messung der Relativbewegung verbessert werden Konstruktive Einfachheit kann sich ergeben, wenn eine in den induktiven Eigenschaften zur Spule im Wesentlichen gleiche Referenzspule vorgesehen ist. Außerdem machen sich die Störeinflüsse bei einer derartigen Ausführung gleichermaßen in beiden Messergebnissen bemerkbar, was eine einfache Differenzbildung gewährleisten kann. Hinzu kommt, dass ein Abgleich der Schwingkreise mit derartigen Spulen vergleichsweise einfach vorgenommen werden kann.

Bilden in Abhängigkeit der Steuerung entweder die Spule oder die Referenzspule einen von der Leistungsversorgung angeregten Schwingkreis mit der Kapazität aus, dann können ohne erheblichen Rechenaufwand in den veränderten Zeitmessdaten des zweiten Schwingkreises kapazitiv bedingte Störeinflüsse erkannt werden. Eine schnelle Messung der Relativbewegung eines Targets kann so erfolgen.

Einfache Konstruktionsverhältnisse für eine Zeitmessung an Hand eines Zeitmessglieds ergeben sich, wenn die Auswerteschaltung eine mit den Schwingkreisen und dem Zeitmessglied verbundene Vergleichsstufe umfasst, die ein vom jeweils angeregten Schwingkreis und einer Vergleichsspannung abhängiges Schaltsignal für das Zeitmessglied zur Zeitmessung erzeugt.

Die Genauigkeit in der Messung der Relativbewegung eines Targets kann verbessert werden, wenn wenigstens die Spule mit dem Target nach dem Wirbelstromprinzip induktiv zusammenwirkt. Es kann nämlich dann die mit einer Änderung der Relativlage des Targets einhergehende wirbelstombedingte Änderung der Dämpfung von elektrischen Schwingungen genützt werden, die Auflösung der Zeitmessung und damit auch die Genauigkeit zu verbessern. Dafür muss lediglich von den Schwingkreisen wenigstens der Schwingkreis mit der Spule derart elektrisch ausgelegt sein, dass in diesem bei Anregung eine unterdämpfte Schwingung entsteht, wobei dann die Vergleichsspannung eine zwischen den Höhen der Anrege- und Ruhespannung des Schwingkreises liegende Spannungshöhe aufweisen kann. Es hat sich nämlich herausgestellt, dass im Gegensatz zum Stand der Technik, bei dem Target und Spule induktiv nach dem Permabilitätsprinzip zusammenwirken und sich damit eine Änderung der Relativlage des Targets in einer Änderung der Frequenz der gedämpften Schwingung des Schwingkreises ausdrückt, vorteilhaft die veränderte Dämpfung eine dazu erhöhte Änderung in den Zeitmessdaten genützt werden kann, vorteilhaft die Auflösung der Relativbewegung zu erhöhen. Damit können selbst gegenüber dem Stand der Technik vergleichsweise kleine Änderungen in der Relativlage des Targets von der Vorrichtung noch erfasst werden.

Ist die Vergleichsstufe zur Übertragung eines mindestens zwei Signalflanken aufweisenden Schaltsignals mit dem Zeitmessglied verbunden, wobei das Zeitmessglied anhand von Zeitmessungen zwischen zeitlich verschiedenen Flanken Zeitmessdaten erzeugt, so kann damit die Genauigkeit der Messung weiter verbessert werden, indem anhand beispielsweise einer Differenzbildung auch eine Laufzeit der Vergleichsstufe aus den Zeitmessdaten korrigiert werden kann.

Vorteilhaft kann sich herausstellen, wenn die Vorrichtung zur Messung der Relativbewegung eines Targets bei einer elektrischen Maschine, die einen Rotor, einen Stator und ein den Rotor am Stator lagerndes Magnetlager mit einer Magnetlagersteuerung aufweist, verwendet wird. Solch eine elektrische Maschine kann beispielsweise ein lagerloser Motor darstellen. Einerseits kann der Rotor als Target für die Vorrichtung zur Positionsmessung dienen und andererseits können die vergleichsweise genauen Daten zur Positionsmessung des Rotors der Magnetlagersteuerung zugeführt werden, wenn die Magnetlagersteuerung unter Berücksichtigung dieser Messung das Magnetlager regelnd ansteuert. Damit kann außerdem eine selbst auf geringe Änderungen in der Relativbewegung des Rotors eine vergleichsweise schnell reagierende Magnetlagersteuerung geschaffen werden.

Sind für jede radiale Bewegungsachse des Rotors je eine Spule und eine Referenzspule diametral gegenüberliegend mit Abstand zum Rotor angeordnet, dann können radiale Positionsänderungen des Rotors äußerst genau erfasst werden, weil, wie bereits erwähnt, Störeinflüsse, beispielsweise durch eine Wärmebelastung des Motors, einen verminderten Einfluss auf die Positionsmessungen haben können.

Die Erfindung löst die gestellte Aufgabe hinsichtlich des Verfahrens dadurch, dass bei der Messung eine, von den erfassten Zeitdaten des ersten und des zweiten Schwingkreises abhängige Differenz berücksichtigt wird, wobei wenigstens bei einer Zeitmessung des zweiten Schwingkreises die Referenzspule mit dem Target induktiv zusammenwirkt.

Die Positionsmessung kann besonders verbessert werden, wenn bei der Positionsmessung eine, von den erfassten Zeitdaten des ersten und des zweiten Schwingkreises abhängige Differenz berücksichtigt wird, wobei wenigstens bei einer Zeitmessung des zweiten Schwingkreises die Referenzspule mit dem Target induktiv zusammenwirkt. Vorteilhaft kann insbesondere weiter sein, wenn sich die induktive Änderung der Referenzspule entgegengesetzt zur Spule verhält, weil dann eine erhöhte Auflösung durch verminderte Störeffekte geschaffen werden kann. Außerdem berücksichtigt das Verfahren zur Positionsmessung zusätzlich die Zeitmessdaten einer anderen unterdämpften oder überdämpften, elektrischen Schwingung eines zweiten angeregten Schwingkreises, der sich wenigstens zwischen einer Referenzspule und der Kapazität des einen Schwingkreises ausbildet. Damit kann der Messung zur Relativbewegung eines Targets eine erhöhte Menge an Zeitmessdaten zugeführt werden, die sich mindestens im Einfuß der unterschiedlichen Spulen bzw. der Spule und der Referenzspule unterscheiden. Anhand der gemeinsamen Verwendung der Kapazität kann nun unter Berücksichtigung der bekannten physikalischen Zusammenhänge sowie der bekannten elektrischen Kenngrößen der Bauteile auf eventuelle Störeffekte der Kapazität geschlossen werden. Diese Störeffekte können so bei der Messung der Relativbewegung, die beispielsweise eine Winkel- oder Positionsmessung darstellen kann, berücksichtigt werden, was vergleichsweise abgeglichene sowie gegenüber äußeren Einflüssen autarke Voraussetzungen für ein genaues Verfahren schaffen kann.

Einfache Verfahrensschritte zur Vermeidung von kapazitiven Störeinflüssen können sich ergeben, wenn zur Erzeugung der unterdämpften oder überdämpften, elektrischen Schwingung entweder die Spule oder die Referenzspule einen Schwingkreis mit der Kapazität ausbilden.

### Kurze Beschreibung der Zeichnung

In den Figuren ist der Erfindungsgegenstand zur Messung einer Relativbewegung eines Targets anhand eines Ausführungsbeispiels beispielsweise dargestellt. Es zeigen
- Fig. 1: einen schematischen Aufbau der Vorrichtung zur Positionsmessung,
- Fig. 2: einen Signalablauf zu unterdämpften Schwingungen der beiden Schwingkreise nach Fig. 1,
- Fig. 3: einen Signalablauf zu überdämpften Schwingungen der beiden Schwingkreise nach Fig. 1,
- Fig. 4: die Verwendung der nach Fig. 1 dargestellten Vorrichtung bei einer elektrischen Maschine und
- Fig. 5: eine vereinfachte Ansicht auf die nach Fig. 1 dargestellte Vorrichtung, die im Gegensatz zur Fig. 1 zur Winkelmessung verwendet wird.

### Weg zur Ausführung der Erfindung

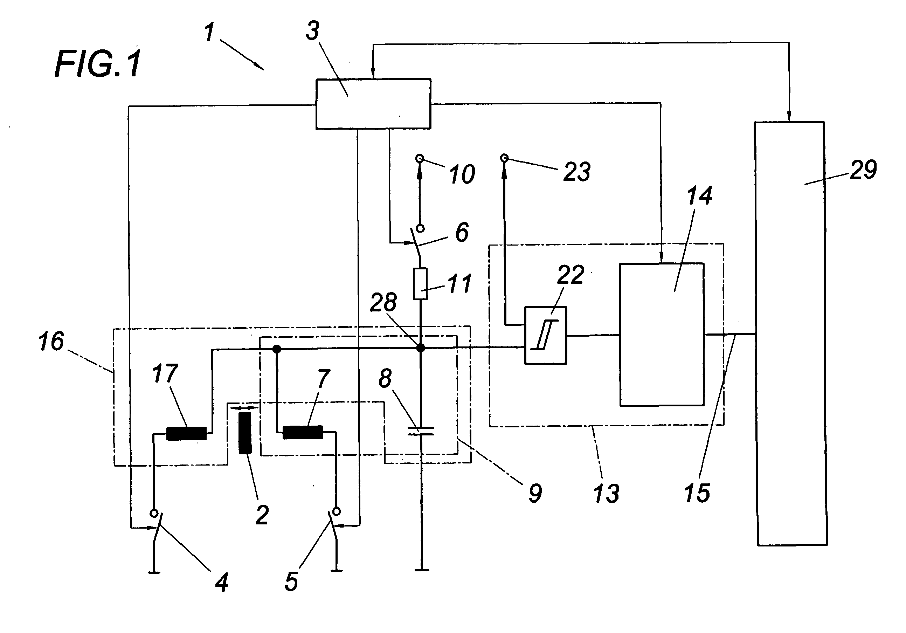

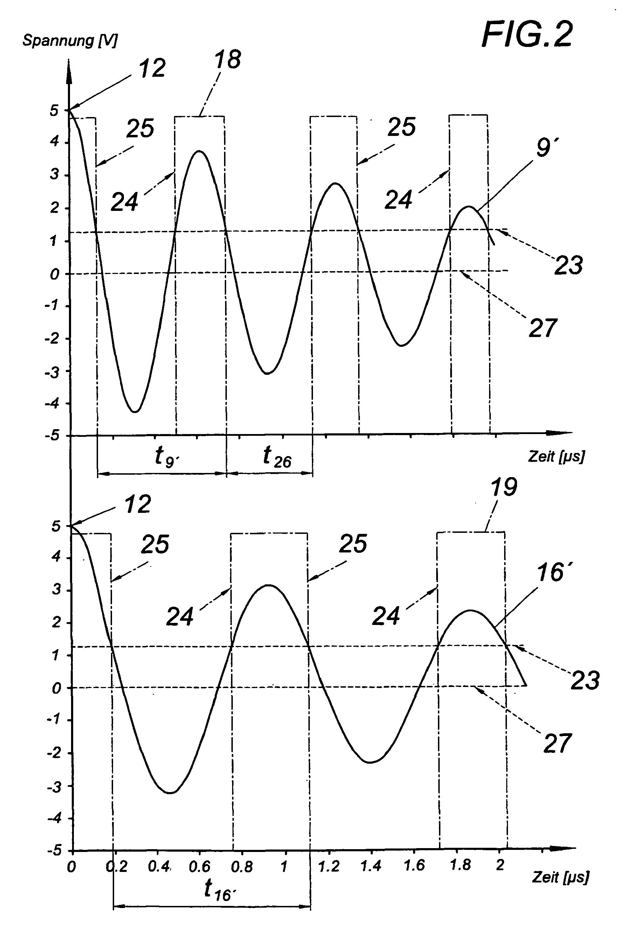

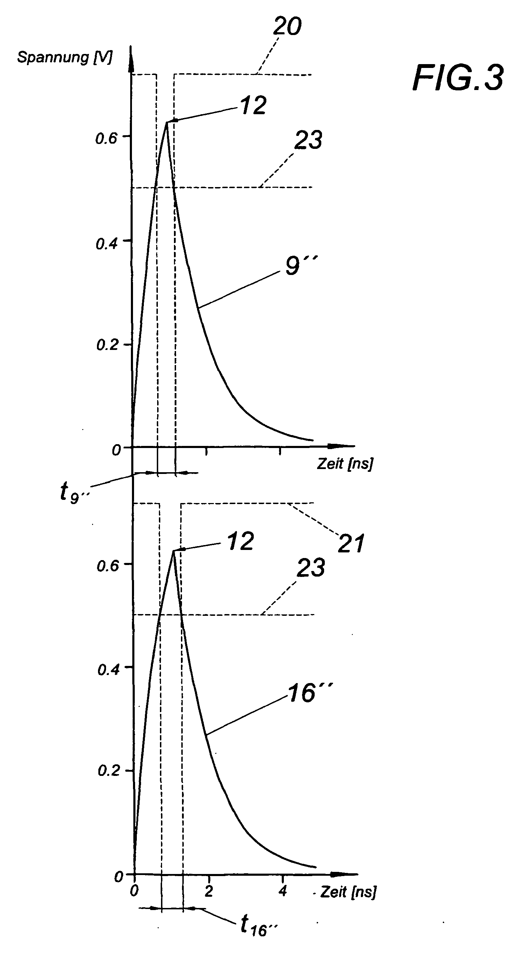

Die nach Fig. 1 beispielsweise dargestellte Vorrichtung 1 zur Messung der Relativbewegung, und zwar zur Positionsmessung, eines Targets 2 weist eine Steuerung 3 auf, die mit den Schaltern 4, 5 und 6 verbunden ist. Mit dem Target 2 wirkt eine Spule 7 induktiv zusammen, sodass es bei einer Relativbewegung des Targets 2 gegenüber der Spule 7 zu einer, je nach Wirkprinzip verschienenen und "scheinbaren" Änderung der Induktivität der Spule 7 kommt, was detektiert werden kann. Zu diesem Zweck bildet die Spule 7 mit der Kapazität 8 einen Schwingkreis 9 aus, wofür die Spule 7 mit der Kapazität 8 verbunden und der Schalter 5 geschlossen ist. Der Schwingkreis 9 hat zur Erzeugung einer unterdämpften Schwingung 9' (die der Einfachheit auch als gedämpfte Schwingung bezeichnet wird) oder einer überdämpften Schwingung 9" (die meist als Entladungskurve bezeichnet wird) angeregt zu werden, wozu eine Leistungsversorgung 10 vorgesehen ist, die von der Steuerung über den Schalter 6 zugeschaltet werden kann. Zu diesem Zweck ist zunächst der Schalter 5 und der Schalter 4 offen, so dass die Kapazität 8 über den Widerstand 11 auf eine Anregespannung 12 aufgeladen werden kann. Danach wird der Schalter 6 geöffnet, und der Schalter 5 zur Erzeugung der nach Fig. 2 bzw. Fig. 3 dargestellten Schwingung 9' bzw. 9" geschlossen. Die jeweilige Schwingungsart ist durch eine geeignete Wahl der elektrischen Kenngrößen der betreffenden Bauteile einstellbar und einem Fachmann ohne weiteres möglich. Diese Schwingung 9' bzw. 9" wird von einer Auswerteschaltung 13 ausgewertet. Zu diesem Zweck weist die Auswerteschaltung 13 ein Zeitmessglied 14 auf, dass mit dem Schwingkreis 9 zur Erzeugung von, von der Anregung des Schwingkreises 9 abhängigen Zeitmessdaten t_{9'} bzw. t_{9"} verbunden ist, die am Ausgang des Zeitmessglieds über einen Datenbus 15 abgegriffen werden können, was den Figuren 2 und 3 zu entnehmen ist. Anhand der Zeitmessdaten t_{9'} bzw. t_{9"} kann nun auf die Position des Targets 2 rückgeschlossen werden, weil dies in einer Veränderung zur vorhergehenden Schwingung bzw. zu den diesbezüglichen vorhergehenden Zeitmessdaten erkennbar ist. Um eine äußerst genaue Positionsmessung durchführen zu können, weist die Vorrichtung 1 eine zur Bildung eines zweiten Schwingkreises 16 mit der Kapazität 8 verbindbare Referenzspule 17 auf. In Abhängigkeit der Steuerung, nämlich anhand der Schalter 4 und 5, bildet nun entweder die Spule 7 oder die Referenzspule 17 einen von der Leistungsversorgung 10 angeregten Schwingkreis 9 bzw. 16 mit der Kapazität 8 aus, wobei für jeden Schwingkreis 9 bzw. 16 die Steuerung 3 über den Schalter 6 die Kapazität 8 auf eine Anregespannung 12 aufladet, wie bereits vorstehend ausgeführt. Durch die Zeitmessung der Schwingung 16' bzw. 16" des zweiten Schwingkreises 16 stehen daher zusätzliche Zeitmessdaten t_{16'} bzw. t_{16"} am Datenbus 15 zur Verfügung. Diese Daten können dann einer Recheneinheit 29 zugeführt werden, um so Störeffekte durch die Kapazität 8 bei der Positionsmessung kompensieren zu können. So geht beispielsweise dann der Effekt der Alterung der Kapazität 8 bei der Positionsmessung nicht mehr ein, wodurch auch eine häufige Wartung zum Abgleich der Vorrichtung 1 unterbleiben kann. Vorstellbar ist zur Positionsmessung auch Zeitmessdaten einer Schwingung eines Schwingkreises aus Spule 7 parallel zur Referenzspule 17 mit der Kapazität zu berücksichtigen, was nicht näher dargestellt worden ist.

Die insbesondere in den induktiven Eigenschaften zur Spule 7 im Wesentlichen gleiche Referenzspule 17 wirkt ebenso mit dem Target 2 zur Positionsmessung induktiv zusammen. Die Referenzspule kann daher nicht nur zum Abgleich der Vorrichtung sondern auch dazu dienen, positionsabhängige Zeitmessdaten t_{16'} bzw. t_{16"} der Recheneinheit 29 zur Verfügung stellen.

Insbesondere ist dies von Vorteil, wenn die Referenzspule 17 gegenüber dem Target 2 und der Spule 7 derart angeordnet ist, dass die Referenzspule 17 bei einer Positionsänderung des Targets 2 mit einer, zur Spule 7 im wesentlichen entgegengesetzten induktiven Änderung beaufschlagt wird, was in Fig. 1 näher dargestellt wird. Dort ist ersichtlich, dass bei einer Verschiebung des Targets 2 in Richtung der Spule 7 eine im Betrag gleiche Änderung des Abstandes des Targets 2 zur Referenzspule 17 eintritt. Diese Positionsänderung ist nicht nur in den Zeitmessdaten t_{9'} bzw. t_{9"} und t_{16'} bzw. t_{16"} erkennbar, sondern es können bei der Positionsmessung auch Störeinflüsse, die auf beide Spulen 7 und 17 ähnlich wirken, mit einer Differenzbildung eliminiert werden, was eine besonders autarke Vorrichtung 1 schafft.

Das Zeitmessglied 14 ist derart ausgebildet, dass es an Hand von Schaltsignalen 18 und 19 bzw. 20 und 21 eine Zeitmessung vornehmen kann. Zu diesem Zweck umfasst die Auswerteschaltung 13 eine mit dem Schwingkreis 9, 16 und dem Zeitmessglied 14 verbundene Vergleichsstufe 22, insbesondere einen Komparator. Die Vergleichsstufe 22 erzeugt nun ein vom angeregten Schwingkreis 9, 16 und einer Vergleichsspannung 23 abhängiges Schaltsignal 18 und 19 bzw. 20 und 21, anhand dem das Zeitmessglied 14 auf einfache Weise eine Zeitmessung vornehmen kann.

Die impulsartigen Schaltsignale 18 und 19 bzw. 20 und 21 weisen steigende Signalflanken 24 und fallende Signalflanken 25 auf, anhand denen das Zeitmessglied 14 Zeitmessdaten t_{9'} bzw. t_{9"} und t_{16'} bzw. t_{19"} erzeugt. Dafür können zwischen den fallenden und/oder steigenden Signalflanken 24 und/oder 25 Zeitmessdaten t_{9'} bzw. t_{9"} bzw. t_{16'} bzw. t_{16"} und/oder t₂₆ herangezogen werden.

Die Spulen 7 und 17 wirken mit dem Target 2 nach dem Wirbelstromprinzip induktiv zusammen, um eine veränderte Signaldämpfung neben einer Frequenzänderung zur Zeitmessung nützen zu können. Desweiteren sind die Schwingkreise 9 und 16 derart elektrisch ausgelegt, dass in diesen bei Anregung eine unterdämpfte Schwingung 9' bzw. 16' entsteht. Um nun die Auflösung der Zeitmessung bzw. Positionsmessung zu erhöhen, weist die Vergleichsspannung 23 eine zwischen den Höhen der Anregespannung 12 und der Ruhespannung 27 der Schwingkreise 9 bzw. 16 liegende Spannungshöhe auf, was in den Figuren 2 und 3 entnommen werden kann.

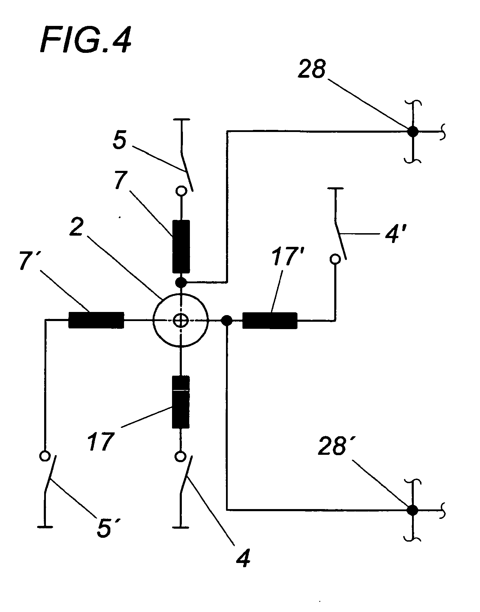

Gemäß Fig. 4 kann eine schematische Darstellung einer Verwendung der nach Fig. 1 gezeigten Vorrichtung 1 bei einer elektrischen Maschine mit einem Magnetlager erkannt werden, wobei der Übersichtlichkeit halber lediglich der Rotor der elektrischen Maschine zu sehen ist. Der Rotor dient als Target für die Spulen 7, 17, 7' und 17'. Die Spulen 7, 17 bzw. 7', 17' sind je über Knotenpunkte 28 und 28' mit weiteren Bauteilen verbunden, die der Übersichtlichkeit halber weggelassen worden sind. Die weiteren Bauteile ergeben sich für einen Fachmann klar mit Verknüpfung des Knotenpunkts 28 der Fig. 1 mit den Knotenpunkten 28 und 28'. Es ist jedoch auch vorstellbar, dass ein paralleler Aufbau angeschlossen je an einem Knotenpunkt 28 und 28' vorgesehen ist, um an Hand der Parallelisierung für eine schnellere Positionsmessung sorgen zu können. Die Daten der Positionsmessung zum Target 2 können dann der Magnetlagersteuerung zugeführt werden, um so die Lage des Rotors zum Stator einstellen zu können, in dem die Magnetlagersteuerung das Magnetlager regelnd ansteuert. Um die radialen Bewegungsachsen des Rotors auf einfache Weise erfassen zu können, sind für jede, radiale Bewegungsachse des Rotors je eine Spule 7 bzw. 7' und eine Referenzspule 17 bzw. 17' diametral gegenüberliegend mit Abstand zum Rotor angeordnet.

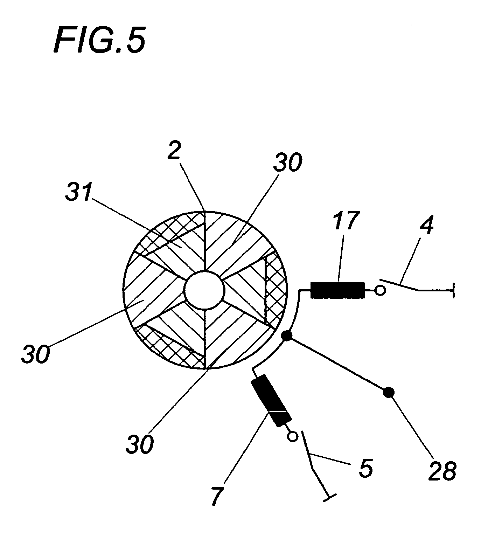

Die nach Fig. 1 dargestellte Vorrichtung 1 zur Messung der Relativbewegung kann auch zu einer Winkelmessung eingesetzt werden, was der Fig. 5 näher entnommen werden kann. Hier sind die Spulen 7 und 17 gegenüber einem scheibenförmigen Target 2 ausgerichtet und wirken mit diesem induktiv zusammen. Das Target 2 weist verschiedene torteneckförmige Felder 30 und 31 auf, die auf die Spulen 7 und 17 in unterschiedlicher Weise induktiv wirken, so dass bei einer Drehung des Targets 2 dessen Relativbewegung erkannt und über Zeitmessdaten von der Vorrichtung erfasst werden kann. Je nach geforderter Auflösung kann die Anzahl der Felder 30, 31 angepasst werden.

## Patentansprüche

1. Vorrichtung (1) zur Messung einer Relativbewegung eines Targets (2), mit einer Steuerung (3), mit wenigstens einer Spule (7) und wenigstens einer Referenzspule (17), welche beiden Spulen (7 und 17) mit dem Target (2) zur Messung einer Relativbewegung induktiv zusammenwirken, mit einer mit der Spule (7) und/oder mit der Referenzspule (17) verbundenen Kapazität (8), wobei zumindest Teile der Kapazität (8) und der Spulen (7, 17) wenigstens zwei elektrische Schwingkreise (9, 16) ausbilden, mit wenigstens einer mit der Steuerung (3) verbundenen elektrischen Leistungsversorgung (10) zur Anregung der Schwingkreise (9, 16) und mit einer ein Zeitmessglied (14), insbesondere TDC Glied, aufweisenden Auswerteschaltung (13), die mit den Schwingkreisen (9, 16) zur Erzeugung von, von der jeweiligen Anregung der Schwingkreise (9, 16) abhängigen Zeitmessdaten (t_{9'} bzw. t_{9"} und t_{16'} bzw. t_{16"}) verbunden ist, über die auf die Relativbewegung des Targets (2) rückgeschlossen werden kann, **dadurch gekennzeichnet, dass** die Referenzspule (17) gegenüber dem Target (2) und der Spule (7) derart angeordnet ist, dass die Referenzspule (17) bei einer Relativbewegung des Targets (2) mit einer zur Spule (7) im Wesentlichen entgegengesetzt induktiven Änderung beaufschlagt wird, um anhand einer Differenzbildung der Zeitmessdaten (t_{9'} bzw. t_{9"} und t_{16'} bzw. t_{16"}) auf die Relativbewegung des Targets (2) rückschließen zu können.

2. Vorrichtung nach Anspruch 1, **dadurch gekennzeichnet, dass** die Referenzspule (17) in deren induktiven Eigenschaften im Wesentlichen gleich zur Spule (7) ausgebildet ist.

3. Vorrichtung nach Anspruch 1 oder 2, **dadurch gekennzeichnet, dass** in Abhängigkeit der Steuerung (3) entweder die Spule (7) oder die Referenzspule (17) einen von der Leistungsversorgung angeregten Schwingkreis (9 bzw. 16) mit der Kapazität (8) ausbilden.

4. Vorrichtung nach Anspruch 1, 2 oder 3, **dadurch gekennzeichnet, dass** die Auswerteschaltung (13) eine mit den Schwingkreisen (9, 16) und dem Zeitmessglied (14) verbundene Vergleichsstufe (22) umfasst, die ein vom jeweils angeregten Schwingkreis (9 bzw. 16) und einer Vergleichsspannung (23) abhängiges Schaltsignal (18 bzw. 19 oder 20 bzw. 21) für das Zeitmessglied (14) zur Zeitmessung erzeugt.

5. Vorrichtung nach Anspruch 4, **dadurch gekennzeichnet, dass** wenigstens die Spule (7) mit dem Target (2) nach dem Wirbelstromprinzip induktiv zusammenwirkt und dass von den Schwingkreisen (9, 16) wenigstens der Schwingkreis (9) mit der Spule (7) derart elektrisch ausgelegt ist, dass in diesem bei Anregung eine unterdämpfte Schwingung (9') entsteht, wobei die Vergleichsspannung (23) eine zwischen den Höhen der Anrege- und Ruhespannung (12 und 27) des Schwingkreises (7) liegende Spannungshöhe aufweist.

6. Vorrichtung nach Anspruch 4 oder 5, **dadurch gekennzeichnet, dass** die Vergleichsstufe (22) zur Übertragung eines mindestens zwei Signalflanken (24, 25) aufweisenden Schaltsignals (18 bzw. 19 oder 20 bzw. 21) mit dem Zeitmessglied (14) verbunden ist, wobei das Zeitmessglied (14) anhand von Zeitmessungen zwischen zeitlich verschiedenen Flanken (24, 25) Zeitmessdaten erzeugt.

7. Verwendung der Vorrichtung zur Messung der Relativbewegung eines Targets (2) nach einem der Ansprüche 1 bis 6 bei einer elektrischen Maschine, insbesondere bei einem lagerlosen Motor, welche elektrische Maschine einen Rotor, einen Stator und ein den Rotor am Stator lagerndes Magnetlager mit einer Magnetlagersteuerung aufweist, wobei der Rotor zumindest teilweise als Target (2) für die Vorrichtung (1) zur Positionsmessung dient und die Magnetlagersteuerung unter Berücksichtigung dieser Messung der Vorrichtung (1) das Magnetlager regelnd ansteuert.

8. Verwendung nach Anspruch 7, **dadurch gekennzeichnet, dass** für jede, radiale Bewegungsachse des Rotors je eine Spule (7 bzw. 7') und eine Referenzspule (17 bzw. 17') diametral gegenüberliegend mit Abstand zum Rotor angeordnet sind.

9. Verfahren zur Messung einer Relativbewegung eines Targets (2), bei dem an Hand einer unterdämpften oder überdämpften, elektrischen Schwingung (9' bzw. 9") eines angeregten Schwingkreises (9), der sich wenigstens zwischen einer Kapazität (8) und einer mit dem Target (2) induktiv zusammenwirkenden Spule (7) ausbildet, Zeitmessdaten (t_{9'} bzw. t_{9"}) erfasst werden, über die auf die Relativbewegung des Targets (2) rückgeschlossen werden kann, wobei zur Messung zusätzlich die Zeitmessdaten (t_{16'} bzw. t_{16"}) einer anderen unterdämpften oder überdämpften, elektrischen Schwingung (16' bzw. 16") eines zweiten angeregten Schwingkreises (16) berücksichtigt werden, der sich wenigstens zwischen einer Referenzspule (17) und der Kapazität (8) des einen Schwingkreises (9) ausbildet, **dadurch gekennzeichnet, dass** bei der Messung eine, von den erfassten Zeitdaten (t_{9'} und t_{16'} bzw. t_{9"} und t_{16"}) des ersten und des zweiten Schwingkreises (9, 16) abhängige Differenz berücksichtigt wird, wobei wenigstens bei einer Zeitmessung des zweiten Schwingkreises (16) die Referenzspule (17) mit dem Target (2) induktiv zusammenwirkt.

10. Verfahren nach Anspruch 9, **dadurch gekennzeichnet, dass** zur Erzeugung der unterdämpften oder überdämpften, elektrischen Schwingung (9' bzw. 16' oder 9" bzw. 16") entweder die Spule (7) oder die Referenzspule (17) einen Schwingkreis (9 bzw. 16) mit der Kapazität (8) ausbilden.

## Claims

1. An apparatus (1) for measuring a relative movement of a target (2), comprising a controller (3), at least one coil (7), and at least one reference coil (17), said two coils (7 and 17) inductively interacting with the target (2) for measuring a relative movement, further comprising a capacitor (8) connected to the coil (7) and/or to the reference coil (17), wherein at least parts of the capacitor (8) and the coils (7, 17) form at least two electric oscillating circuits (9, 16), further comprising at least one electric power supply (10) for exciting the oscillating circuits (9, 16), said power supply being connected to the controller (3), and an evaluation circuit (13), which comprises a time measuring member (14), more particularly a TDC member, and is connected to the oscillating circuits (9, 16) in order to generate time measurement data (t_{9'}, t_{9"} and t_{16'}, t_{16"}) that are dependent on the respective excitation of the oscillating circuits (9, 16), said data allowing a conclusion to be drawn on the relative movement of the target (2), **characterized in that** the reference coil (17) is arranged with respect to the target (2) and the coil (7) in such a way that during a relative movement of the target (2) the reference coil (17) is subjected to a substantially opposite inductive change in order to enable drawing conclusions on the relative movement of the target (2) by forming the difference between the time measurement data (t_{9'}, t_{9"} and t_{16'}, t_{16"}).

2. An apparatus according to claim 1, **characterized in that** the reference coil (17) is formed with respect to its inductive properties substantially similar to the coil (7).

3. An apparatus according to claim 1 or 2, **characterized in that** depending on the controller (3) either the coil (7) or the reference coil (17) forms with the capacitor (8) an oscillating circuit (9, 16) excited by the power supply.

4. An apparatus according to claim 1, 2 or 3, **characterized in that** the evaluation circuit (13) comprises a comparison module (22) which is connected to the oscillating circuits (9, 16) and the time measuring member (14), which comparison module generates a switching signal (18, 19 or 20, 21) for the time measuring member (14), which switching signal is dependent on the respectively excited oscillating circuit (9, 16) and a reference voltage (23).

5. An apparatus according to claim 4, **characterized in that** at least the coil (7) inductively interacts with the target (2) according to the eddy current principle, and from the oscillating circuits (9, 16) at least the oscillating circuit (9) with the coil (7) is electrically formed in such a way that an underdamped oscillation (9') is generated therein upon excitation, wherein the reference voltage (23) has a voltage level disposed between the levels of the excitation and quiescent voltage (12 and 27) of the oscillating circuit (7).

6. An apparatus according to claim 4 or 5, **characterized in that** the comparison module (22) is connected to the time measuring member (14) for transmission of a switching signal (18, 19 or 20, 21) having at least two signal edges (24, 25), wherein the time measuring member (14) generates time measurement data on the basis of time measurements between temporally different edges (24, 25).

7. The use of the apparatus for measuring the relative movement of a target (2) according to one of the claims 1 to 6 in an electric machine, especially a bearing-free motor, which electric machine comprises a rotor, a stator and a magnetic bearing with a magnetic bearing controller, which magnetic bearing mounts the rotor on the stator, wherein the rotor is used at least partly as a target (2) for the apparatus (1) for position measurement and the magnetic bearing controller triggers the magnetic bearing in a controlling manner by taking said measurement of the apparatus (1) into account.

8. The use according to claim 7, **characterized in that** for each radial movement axis of the rotor a respective coil (7, 7') and a reference coil (17, 17') are arranged in a diametrically opposite manner with distance from the rotor.

9. A method for measuring a relative movement of a target (2), in which time measurement data (t_{9'}, t_{9"}) are detected on the basis of an underdamped or overdamped electric oscillation (9', 9") of an excited oscillating circuit (9), which is formed at least between a capacitor (8) and a coil (7) inductively interacting with the target (2), via which time measurement data conclusions can be drawn on the relative movement of the target (2), wherein for the measurement the time measurement data (t_{16'}, t_{16"}) of another underdamped or overdamped electric oscillation (16', 16") of a second excited oscillating circuit (16) are additionally considered, which is formed at least between a reference coil (17) and the capacitor (8) of the one oscillating circuit (9), **characterized in that** during the measurement a difference is considered which is dependent on the detected time data (t_{9'}, t_{16'} or t_{9"}, t_{16"}) of the first and the second oscillating circuit (9, 16), wherein the reference coil (17) inductively interacts with the target (2) at least during a time measurement of the second oscillating circuit (16).

10. A method according to claim 9, **characterized in that** either the coil (7) or the reference coil (17) forms an oscillating circuit (9, 16) with the capacitor (8) for generating the underdamped or overdamped electric oscillation (9', 16' or 9", 16").

## Revendications

1. Dispositif (1) de mesure d'un mouvement relatif d'une cible (2), comportant une commande (3) ; au moins une bobine (7) et au moins une bobine de référence (17), les deux bobines (7 et 17) interagissant de façon inductive avec la cible (2) pour la mesure d'un mouvement relatif; un condensateur (8) connecté à la bobine (7) et/ou à la bobine de référence (17), au moins des parties du condensateur (8) et des bobines (7, 17)) formant au moins deux circuits oscillants électriques (9, 16) ; au moins une alimentation électrique (10) connectée à la commande (3), destinée à exciter les circuits oscillants (9, 16) ; et au moins un circuit d'évaluation (13) comprenant un organe de mesure temporelle (14), notamment un organe TDC (convertisseur temps/numérique), connecté aux circuits oscillants (9, 16) pour produire des données de mesure temporelle (t9' ou. t9" et t16' ou t16") dépendant de l'excitation respective des circuits oscillants (9, 16), permettant de déduire le mouvement relatif de la cible (2), **caractérisé en ce que** la bobine de référence (17) est disposée de telle manière par rapport à la cible (2) et à la bobine (7) que la bobine de référence (17) est soumise à une variation inductive essentiellement opposée à la bobine (7) en cas de mouvement relatif de la cible (2) afin de pouvoir déduire le mouvement relatif de la cible (2) sur la base d'une soustraction des données de mesure temporelle (t_{9'}, t_{9"} et t_{16'}, t_{16"}).

2. Dispositif selon revendication 1, **caractérisé en ce que** la bobine de référence (17) est définie dans ses propriétés inductives essentiellement identiques à la bobine (7).

3. Dispositif selon revendication 1 ou 2, **caractérisé en ce qu'**en fonction de la commande (3), soit la bobine (7) soit la bobine de référence (17) définit un circuit oscillant (9, 16) excité par l'alimentation électrique, avec le condensateur (8).

4. Dispositif selon revendication 1, 2 ou 3, **caractérisé en ce que** le circuit d'évaluation (13) comprend une étape de comparaison (22) reliée aux circuits oscillants (9, 16) et à l'organe de mesure temporelle (14), ladite étape produisant, pour la mesure temporelle, un signal de commutation (18, 19 et 20, 31) dépendant de chaque circuit oscillant (9, 16) excité et d'une tension de comparaison (23), pour l'organe de mesure temporelle (14).

5. Dispositif selon revendication 4, **caractérisé en ce qu'**au moins la bobine (7) interagit de manière inductive avec la cible (2) d'après le principe des courants de Foucault, et **en ce que** par les circuits oscillants (9, 16) au moins le circuit oscillant (9) est disposé électriquement avec la bobine (7) de manière à ce que dans ce circuit, en cas d'excitation une oscillation (9') à faible amortissement apparaît, où la tension de comparaison (23) présente une hauteur de tension située entre les hauteurs de tension d'excitation et de repos (12, 27) du circuit oscillant (7).

6. Dispositif selon revendication 4 ou 5, **caractérisé en ce que** l'étape de comparaison (22) pour la transmission d'un signal de commutation (18 ou 19 et 20 ou 21) présentant au moins deux flancs de signal (24, 25), est reliée à l'organe de mesure temporelle (14) où l'organe de mesure temporelle (14) produit des données de mesure temporelle sur la base de mesures temporelles entre les flancs (24, 25) différents d'un point de vue temporel.

7. Application du dispositif de mesure d'un mouvement relatif d'une cible (2), selon l'une des revendications 1 à 6, avec une machine électrique, plus particulièrement un moteur sans palier, dont la machine électrique présente un rotor, un stator et un palier magnétique logeant le rotor au stator, avec une commande à palier magnétique, où le rotor sert, du moins partiellement, à mesurer la position en tant que cible (2) pour le dispositif (1), et la commande à palier magnétique considérant cette mesure du dispositif (1) commande en contrôlant le palier magnétique.

8. Application selon la revendication 7, **caractérisé en ce que**, pour chaque axe de mouvement radial du rotor, une bobine (7, 7') et une bobine de référence (17, 17") sont agencées de manière diamétralement opposée à une certaine distance du rotor.

9. Procédé de mesure d'un mouvement relatif d'une cible (2) où à l'aide d'une oscillation (9', 9") électrique de faible ou de fort amortissement d'un circuit oscillant excité (9) qui se forme au moins entre un condensateur (8) et une bobine (7) interagissant de manière inductive avec la cible (2), regroupe des données de mesure temporelle (t_{9'}, t_{9"}), permettant de déduire le mouvement relatif de la cible (2), où les données de mesure temporelle (t_{16'}, t_{16"}) d'une autre oscillation (16', 16") électrique de faible ou de fort amortissement d'un deuxième circuit oscillant (16) excité, seront de surcroît prises en compte pour la mesure, ledit circuit se formant au moins entre le bobine de référence (17) et le condensateur (8) de l'un des circuits oscillants (9), **caractérisé en ce que** lors de la mesure, une différence est prise en compte en fonction des données temporelles saisies (t_{9'}, t_{16'} ou t_{9"}, t_{16"}) du premier et du deuxième circuit oscillant (9, 16), où la bobine de référence (17) interagit de manière inductive avec la cible (2) au moins lors d'une mesure temporelle du deuxième circuit oscillant (16).

10. Procédé selon revendication 9, **caractérisé en ce que** pour produire l'oscillation (9', 16' ou 9", 16") électrique de faible ou de fort amortissement soit la bobine (7) soit la bobine de référence (17) définit un circuit oscillant (9, 16) avec le condensateur (8).
